# NEUE EUROPÄISCHE PATENTSCHRIFT

(11) **EP 3 322 942 B2**
(45) Veröffentlichungstag und Bekanntmachung des Hinweises auf die Entscheidung über den Einspruch: **22.11.2023**
(45) Hinweis auf die Patenterteilung: 01.07.2020
(21) Anmeldenummer: 16736878.6
(22) Anmeldetag: 08.07.2016
(51) Int. Cl.: B21D 13/10, B21D 53/04, B60H 1/22, H05B 3/50, F24H 3/04, F24H 9/18, B21D 53/02, F28F 1/12

(54) **VERFAHREN ZUM HERSTELLEN EINES WELLRIPPENELEMENTES, WELLRIPPENELEMENT UND HEIZREGISTER**
METHOD FOR PRODUCING A CORRUGATED FIN ELEMENT, CORRUGATED FIN ELEMENT, AND HEATING REGISTER
PROCÉDÉ DE FABRICATION D'UN ÉLÉMENT À AILETTES ONDULÉES, ÉLÉMENT À AILETTES ONDULÉES ET REGISTRE DE CHAUFFAGE

(30) Priorität: 16.07.2015 DE 102015111571
(43) Veröffentlichungstag der Anmeldung: 23.05.2018
(73) Patentinhaber: DBK David + Baader GmbH, Nordring 26 76761 Rülzheim (DE)
(72) Erfinder: PROKOP, Jürgen, 76829 Landau (DE); WERLING, Wolfgang, 76770 Hatzenbühl (DE); LEHMANN, Didier, 67480 Leutenheim (FR); JÄGER, Rupert, 76744 Wörth-Büchelberg (DE)
(74) Vertreter: Winter, Brandl - Partnerschaft mbB
(86) Internationale Anmeldenummer: PCT/EP2016/066345
(87) Internationale Veröffentlichungsnummer: WO 2017/009254

(56) Entgegenhaltungen:
- EP-A1- 2 022 293
- EP-A1- 2 251 115
- EP-B1- 0 350 528
- EP-B1- 1 327 834
- EP-B1- 2 022 293
- EP-B1- 2 031 332
- WO-A1-2007/135644
- WO-A1-2013/153157
- CH-A- 358 773
- DE-A1-102013 108 357
- GB-A- 1 535 781
- JP-A- S5 890 334
- JP-A- H08 261 678
- US-A- 2 329 789

## Beschreibung

Die Erfindung betrifft ein Verfahren zum Herstellen eines durchströmbaren Wellrippenelementes für ein Heizregister oder für eine andere Heizvorrichtung gemäß dem Oberbegriff des Patentanspruches 1, ein nach einem derartigen Verfahren hergestelltes Wellrippenelement und ein Heizregister oder dergleichen mit einer Vielzahl derartiger Wellrippen.

Für den Einsatz in Kraftfahrzeugen, insbesondere mit verbrauchsoptimierten Verbrennungsmotoren werden häufig elektrische Heizvorrichtungen zum Erwärmen von Luftströmen verwendet. Derartige Heizvorrichtungen sind für Hochvolt- und Niedervoltapplikationen in der Automobiltechnik, aber auch in der industriellen Technik, beispielsweise bei Schaltschrankbeheizungen, Zusatzheizungen für Niedrigenergiehäuser, etc. einsetzbar.

Der Grundaufbau derartiger Heizvorrichtungen ist beispielsweise in der EP 0 350 528 B1 der Anmelderin offenbart. Demgemäß hat die Heizvorrichtung mehrere Heizstufen, die je nach abzurufender Heizleistung ansteuerbar sind und im Prinzip aus zwei Radiatorelementen bestehen, zwischen denen Heizelemente, vorzugsweise PTC-Heizelemente (positive temperature coefficient) angeordnet sind. Diese Radiatorelemente sind als Wellrippen ausgeführt, die aus einem Blechband mäanderförmig gebogen sind, wobei die einzelnen Wellrippen in den an ihre Schenkel angrenzenden Bereichen wechselseitig an einander liegen.

In der EP 2 022 293 B1 sind Wellrippenelemente gezeigt, bei denen zur Erhöhung einer Steifigkeit die Wellrippen mit einander verlötet sind.

Aus der EP 1 327 834 B1 ist es bekannt, zur Aussteifung der Wellrippenelemente diese mit an die Scheitel der Wellrippen angeordneten Kontaktblechen zu vercrimpen, so dass die Handhabung der an sich flexiblen Wellrippenelemente deutlich verbessert ist.

In der DE 10 2013 108 357 A1 werden Wellrippenelemente beschrieben, bei denen zur Erhöhung der Steifigkeit die Scheitel der Wellrippen quer zur Längserstreckung des Wellrippenelementes mit einer Presskraft beaufschlagt werden, so dass diese Scheitel "abgeflacht" werden. Zusätzlich können in den sich an die Scheitel anschließenden Schenkeln der Wellrippen Sicken ausgebildet sein.

Aus der JP-H08261678 A ist ein Verfahren zum Herstellen eines umströmbaren Wellrippenelementes für eine Heizvorrichtung, wobei das Wellrippenelement eine Vielzahl von wellenförmig ausgebildeten Wellrippen hat, mit den Schritten: Herstellen eines Zwischenprodukts eines Wellrippenelementes derart, dass Scheitel der Wellrippen aneinander liegen oder in geringem Abstand zu einander angeordnet sind, und Beaufschlagen des Zwischenprodukts des Wellenrippenelementes mit einer Zugkraft derart, dass ein Abstand zwischen den Scheiteln durch Umformen vergrößert wird und sich dadurch die Gesamtlänge des Wellrippenelementes entsprechend vergrößert.

Eine weitere Möglichkeit besteht gemäß der EP 2 022 293 B1 darin, ein Kontaktblech oder dergleichen mit den Scheiteln der Wellrippen zu verlöten. Alternativ ist es auch bekannt, die Wellrippen mit dem Kontaktblech durch Kleben zu verbinden.

Bei allen diesen Lösungen liegen die Scheitel der Wellrippen entweder seitlich an einander an oder stehen in einem sehr geringen Abstand. Diese geringen Abstände zwischen den Wellrippen eines Wellrippenelementes führen jedoch beim Durchströmen zu einem erhöhten Druckverlust und einer damit einhergehenden Verringerung der Strömungsgeschwindigkeit der Luft und einer erhöhten Geräuschbildung der Heizung.

Prinzipiell kann man den Druckverlust verringern, indem die Scheitel zu einander beabstandet sind. Derartige Wellrippenelemente mit weit beabstandeten Wellrippen haben jedoch den Nachteil, dass sie nach dem Biegen noch flexibler als die Elemente mit geringem Scheitelabstand sind und des Weiteren aufgrund der deutlich vergrößerten Länge der Platzbedarf beim mäanderförmigen Biegen des Rohblechbandes groß ist. Ebenso ist es möglich, den Druckverlust durch Bildung von durchströmten Zonen ohne Wellrippenelemente zu verringern. Solche Lösungen mit Bypass haben jedoch den Nachteil, dass die Luftverteilung nicht mehr homogen ist.

Demgegenüber liegt der Erfindung die Aufgabe zugrunde, ein Verfahren zu schaffen, mit dem die Herstellung eines mit geringem Druckverlust durchströmbaren Wellrippenelementes vereinfacht ist. Der Erfindung liegt des Weiteren die Aufgabe zugrunde, ein Wellrippenelement mit verringertem Durchströmungsquerschnitt und ein mit zumindest einem derartigen Wellrippenelement ausgeführtes Heizregister zu schaffen.

Diese Aufgabe wird im Hinblick auf das Verfahren durch die Merkmalskombination des Patentanspruches 1, im Hinblick auf das Wellrippenelement durch die Merkmalskombination des Patentanspruches 4-und im Hinblick auf das Heizregister durch die Merkmalskombination des Patentanspruches 5 gelöst.

Sonstige vorteilhafte Weiterbildungen der Erfindung sind Gegenstand der Unteransprüche.

Erfindungsgemäß wird zum Herstellen eines Wellrippenelementes zunächst ein Wellrippen-Grundelement hergestellt, das im Prinzip einen herkömmlichen Aufbau hat, so dass verrundeten die Scheitel der einzelnen Wellrippen entweder an einander anliegen oder in einem geringen Abstand zu einander angeordnet sind. Ein derartiges Wellrippen-Grundelement unterscheidet sich im Prinzip nicht von den eingangs beschriebenen herkömmlichen Wellrippenelementen.

Im Anschluss an die Fertigung dieses Grundelementes werden dessen Endabschnitte dann mit einer Zugkraft in Längsrichtung des Wellrippenelementes beaufschlagt, so dass eine Aufweitung des Wellrippenelementes dahingehend erfolgt, dass sich der Abstand zwischen den Scheiteln durch plastische Verformung (Aufbiegen) vergrößert und sich somit die Gesamtlänge des Wellrippenelementes entsprechend vergrößert. Durch die damit einhergehende flachere Anstellung der Wellrippen wird einerseits der Strömungswiderstand beim Durchströmen deutlich verringert. Andererseits zeigte es sich überraschender Weise, dass sich durch das Aufbiegen der Grundelemente eine sehr gleichmäßige, reproduzierbare Wellenstruktur ausbilden lässt. Die Stabilität des Wellrippenelementes ist verbessert, da dieses oder das Grundelement vor oder nach dem Auffalten mit einer Presskraft beaufschlagt werden. Diese Presskraft ist dabei so gewählt, dass die Scheitel (Grundelement oder Wellrippenelement) plastisch abgeflacht oder "planiert" werden. Die Lamellenschenkel sind mit einem Winkel von mehr als 30° angestellt.

Dementsprechend wird durch ein nach einem derartigen Verfahren hergestelltes Wellrippenelement bei geringem fertigungstechnischem Aufwand der Durchströmungswiderstand verringert.

Ein mit einem derartigen Wellrippenelement ausgeführtes Heizregister ist bei einfachem Aufbau herkömmlichen Lösungen aufgrund der optimierten Strömungsgeschwindigkeit und der verringerten Geräuschbildung überlegen.

Die Stabilität der Wellrippenelemente und der Wärmeaustausch quer zur Durchströmungsrichtung lassen sich durch Ausbilden von Sicken verbessern.

Bei einer Variante einer derartigen Ausführungsform sind mehrere Sicken nebeneinander liegend angeordnet.

Bei einem Ausführungsbeispiel der Erfindung erfolgt die Aufweitung derart, dass nach der Umformung der Abstand zwischen den Scheiteln ein Vielfaches der Scheitelbreite, vorzugsweise der Scheitelbreite des Grundelements, beträgt.

Dieses "Planieren" kann somit nach der Ausbildung des Grundelementes oder nach dem Auffalten erfolgen. Prinzipiell kann auch auf dieses Planieren verzichtet werden.

Ein bevorzugtes Ausführungsbeispiel der Erfindung wird im Folgenden anhand schematischer Zeichnungen näher erläutert. Es zeigen:
Figur 1 zeigt eine Prinzipdarstellung eines Heizregisters mit einer Vielzahl von Wellrippenelementen;
Figur 2 eine dreidimensionale Darstellung eines Wellrippen-Grundelementes zur Fertigung eines Wellrippenelementes gemäß Figur 1;
Figur 3 eine vergrößerte Teildarstellung des Grundelementes aus Figur 1;
Figur 4 eine Abbildung zur Erläuterung des erfindungsgemäßen Verfahrens zur Herstellung eines Wellrippenelementes und
Figur 5 ein nach einem derartigen Verfahren hergestelltes Wellrippenelement für ein Heizregister gemäß Figur 1.

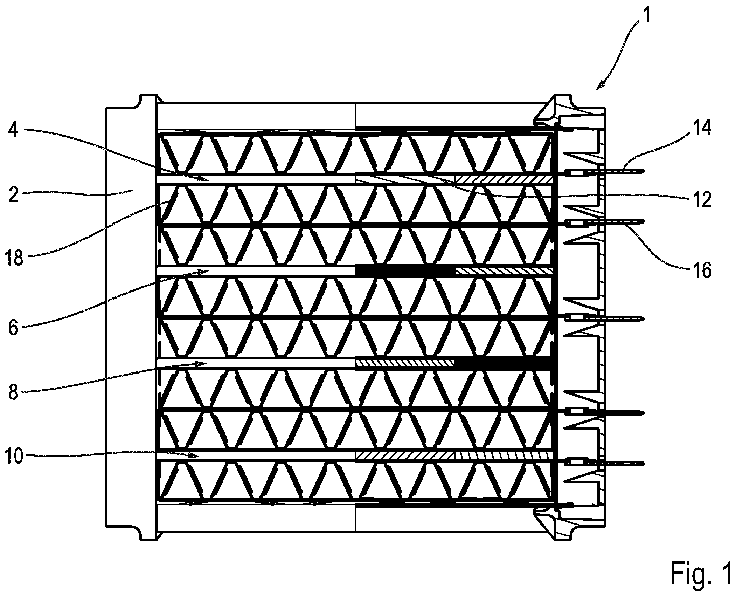

Figur 1 zeigt eine Seitenansicht eines Heizregisters 1, wie es beispielsweise zur Erwärmung eines Luftstroms verwendet wird. Dieses Heizregister 1 hat einen Rahmen 2, in den vier Heizelemente 4, 6, 8, 10 eingesetzt sind. Jedes Heizelement hat beispielsweise PTC-Widerstandselemente 12, die jeweils über elektrische Kontakte 14, 16 (Stromzuführung, Masse) ansteuerbar sind. Die eigentliche elektrische Kontaktierung kann beispielsweise über Kontaktbleche erfolgen, die in elektrischer Wirkverbindung mit den PTC-Bausteinen stehen. Dabei kann - wie beim dargestellten Ausführungsbeispiel - die elektrische Kontaktierung über die Kontaktbleche und über Wellrippen erfolgen.

Selbstverständlich können anstelle der PTC-Widerstandselemente 12 auch Heizelemente anderer Bauart verwendet werden.

Gemäß der Darstellung in Figur 1 hat jedes Heizelement zwei beidseitig der PTC-Widerstandselemente 12 angeordnete Wellrippenelemente 18, die in thermischem (und auch elektrischem) Kontakt mit den PTC-Widerstandselementen 12 stehen und die von diesen abgegebene Wärme an die Luft übertragen, die das Heizregister 1 senkrecht zur Zeichenebene durchströmt. Der Aufbau derartiger Heizregister 1 ist bekannt, so dass weitere Erläuterungen entbehrlich sind.

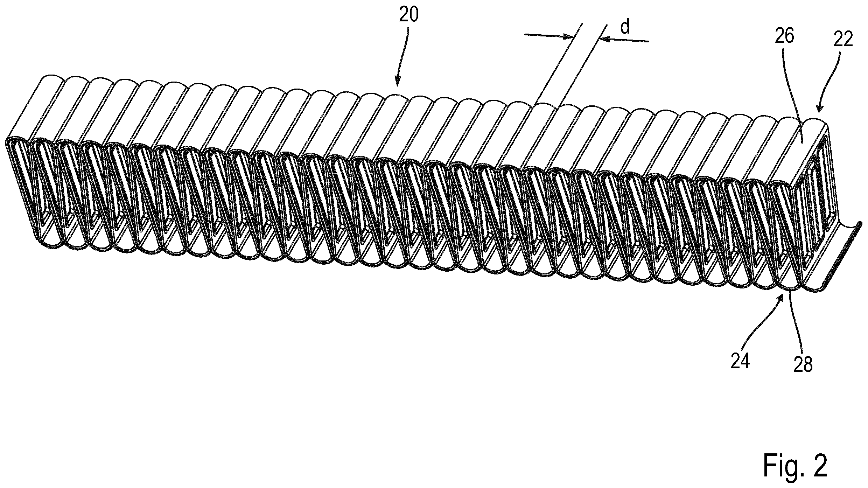

Figur 2 zeigt ein Wellrippen-Grundelement 20, aus dem die im Heizregister 1 verbauten Wellrippenelemente 18 gebildet werden. Ein derartiges Grundelement 20 entspricht im Wesentlichen den Wellrippenelementen, wie sie im eingangs genannten Stand der Technik gemäß der DE 10 2013 108 357 A1 offenbart sind. Demgemäß hat ein derartiges Grundelement 20 eine Vielzahl von mäanderförmig aus einem Blechband gebogene Wellrippen 22, 24, deren Scheitel 26, 28 in der Darstellung gemäß Figur 2 bündig an einander liegen oder aber in einem vergleichsweise geringen Abstand zu einander angeordnet sind, der deutlich geringer ist als die Breite d eines Scheitels.

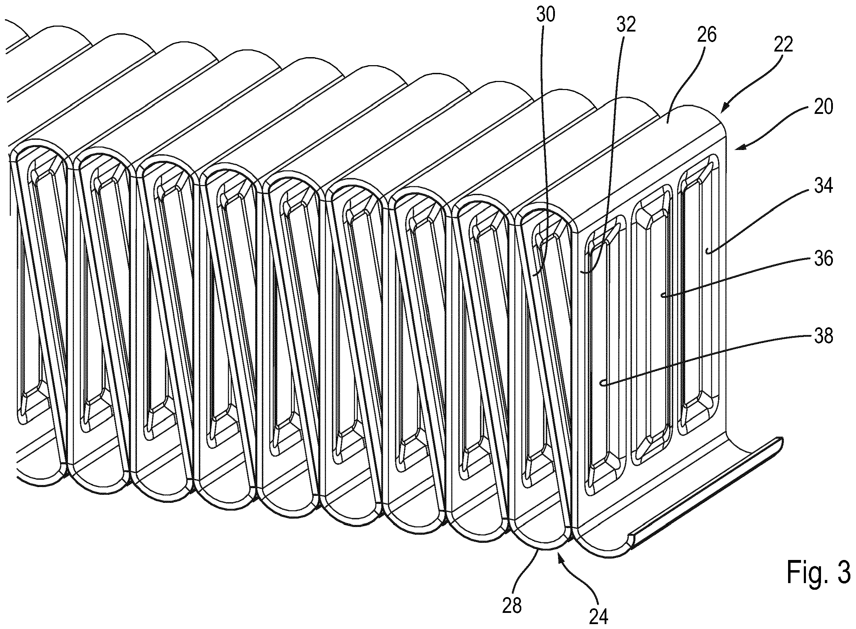

Wie der vergrößerten Detaildarstellung gemäß Figur 3 entnehmbar ist, geht jeder Scheitel 26, 28 in Lamellenschenkel 30, 32 über, die V-förmig zu einander angestellt sind, wobei sich dieses V vom zugeordneten Scheitel 26 weg zum anderen Scheitel 28 hin schließt. In jedem Lamellenschenkel 30, 32 sind Sicken, beim dargestellten Ausführungsbeispiel drei neben einander liegende Sicken 34, 36, 38 ausgebildet, die durch Stanzbiegen beim Herstellen des Grundelementes 20 ausgebildet werden. Dabei sind die beiden außen liegenden Sicken 34, 38 nach innen, zum gegenüber liegenden Lamellenschenkel 30 hin geprägt, während sich die der mittleren Sicke 36 nach rechts, zur benachbarten Wellrippe hin ausformt. Selbstverständlich kann auch eine andere Sickengeometrie oder eine andere Anzahl von Sicken verwendet werden. Durch diese Sicken wird die Wellrippe 22, 24 deutlich gegenüber sickenlosen Wellrippen ausgesteift, so dass der Transport der umgeformten Grundelemente 20 von dem Biegewerkzeug zum nächsten Verarbeitungsschritt aufgrund der erhöhten Steifigkeit verbessert ist.

Hinsichtlich weiterer Einzelheiten wird der Einfachheit halber auf die DE 10 2013 108 357 A1 verwiesen.

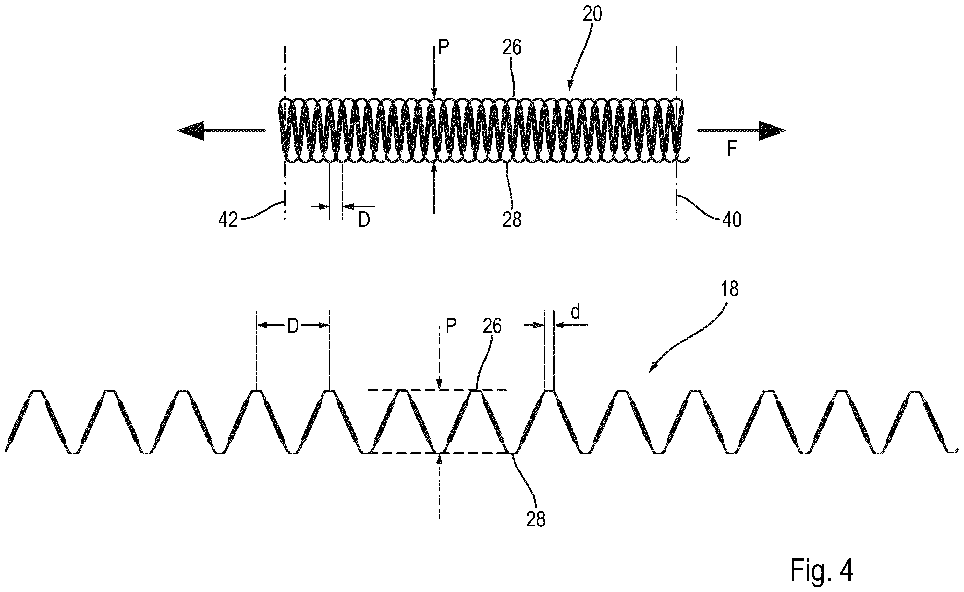

Das derart gefertigte Grundelement 20 mit wechselseitig an einander anliegenden Wellrippen 22, 24 wird dann - wie in Figur 4 dargestellt - in einem weiteren Fertigungsschritt zum Wellrippenelement 18 verarbeitet, wie es in dem Heizregister 1 verbaut ist. Dabei werden vorzugsweise - wie in der DE 10 2013 108 357 A1 - die verrundeten Scheitel 26, 28 mit einer Presskraft P (siehe Figur 4 oben) beaufschlagt. Diese Presskraft P wirkt quer zur Längserstreckung des Grundelementes 20. Durch diese Presskraft P wird erreicht, dass die ursprünglich verrundete Scheitel 26, 28 wie in Figur 4 unten dargestellt, abgeflacht (planiert) werden. Dieses Planieren kann beispielsweise durch ein Presswerkzeug erfolgen, das eine Vielzahl von Scheiteln 26, 28 gleichzeitig mit der Presskraft P beaufschlagt.

Nach diesem Abflachen wird das Grundelement 20 gemäß der Darstellung in Figur 4 oben mit einer Zugkraft F beaufschlagt. Dazu greifen an strichpunktiert angedeuteten Haltebereichen 40, 42 die Zugkraft übertragende Elemente an dem Grundelement 20 an, um dieses wie in Figur 4 dargestellt, aus einander zu ziehen, so dass der im Grundzustand "negative" Wellrippenwinkel aufgeweitet wird, so dass der Wellrippenwinkel zwischen dem Lamellenschenkel 30, 32 gewissermaßen invertiert wird. Dies führt dazu, dass die Lamellenschenkel 30 beispielsweise vom oben liegenden Scheitel 26 zum nächsten darunter liegenden Scheitel 28 aus einander laufen. Diese aus einer plastischen Umformung des Grundelementes 20 resultierende Aufweitung führt dazu, dass die Gesamtlänge sich deutlich gegenüber der Gesamtlänge des Grundelementes 20 vergrößert. Beim dargestellten Ausführungsbeispiel beträgt beispielsweise der Abstand D zwischen zwei benachbarten Scheiteln ein Vielfaches, beispielsweise mehr als das 5-fache der Breite d eines Scheitels. Beim Grundelement 20 ist der Abstand D nahezu Null, da die Wellrippen 22, 24 entlang ihrer Scheitel 26, 28 an einander anliegen.

Es zeigte sich überraschender Weise, dass durch das erfindungsgemäße Verfahren, d.h. zunächst ein Grundelement 20 in nahezu herkömmlicher Bauweise auszubilden und dann dieses Grundelement 20 aufzuweiten, ein Wellrippenelement 18 bereitgestellt wird, das sich mit hoher Präzision bei vorgegebenem Scheitelabstand D produzieren lässt. Ein derartiges Wellrippenelement 18 zeichnet sich durch eine vergleichsweise große Steifigkeit bei sehr einfacher Herstellbarkeit aus.

Es zeigt sich des Weiteren, dass durch das Planieren die Gefahr eines Einzugs, bei dem beispielsweise der zwischen zwei in Figur 4 unten liegenden Scheiteln 28 angeordnete obere Scheitel 26 "eingezogen" wird und sich zu den beiden anderen Scheiteln 28 hin einwölbt, beseitigt ist.

Das erfindungsgemäße Verfahren kann an abgelängten Grundelementen oder aber auch an einem als "Endlosband" ausgebildeten Grundelementstrang ausgeführt werden, wobei das Ablängen dann in einem weiteren Verfahrensschritt erfolgt.

Abweichend von der oben beschriebenen Vorgehensweise ist es auch möglich, wie in Figur 4 unten gestrichelt angedeutet, die Presskraft P zum Abflachen (Planieren) der Scheitel 26, 28 in einem dem Auffalten durch die Kraft F nachfolgenden Arbeitsgang aufzubringen.

Durch das Planieren wird neben der Versteifung auch erreicht, dass eine gute Anlagefläche für angrenzende Elemente, wie zum Beispiel PTC-Widerstandselemente 12 oder Kontaktbleche geschaffen wird.

Alternativ ist es auch möglich, den Arbeitsgang des Planierens ganz entfallen zu lassen.

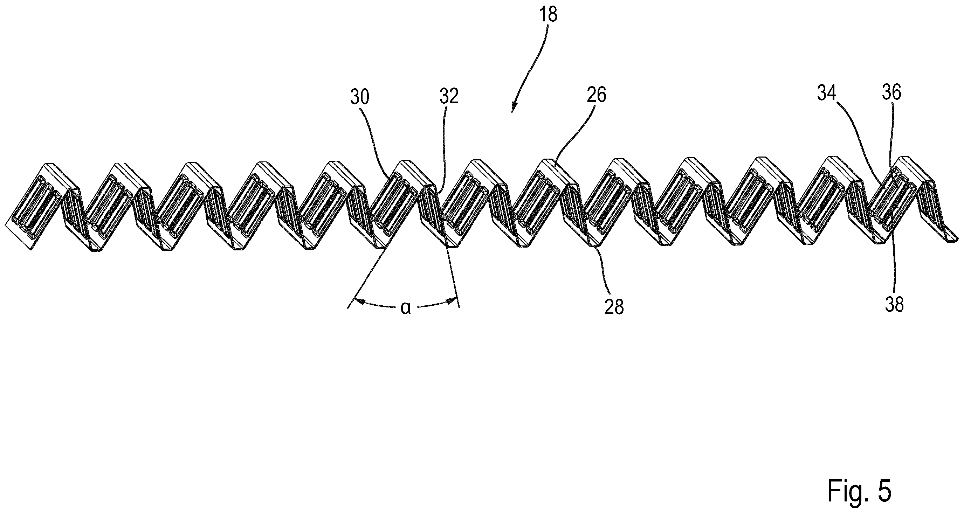

Figur 5 zeigt eine dreidimensionale Darstellung des durch Auffalten eines Grundelementes hergestellten Wellrippenelementes 18. In dieser Darstellung erkennt man die durch Planieren abgeflachten Scheitel 26, 28 und die mit einem vergleichsweise großen V-Winkel α angestellten Lamellenschenkel 30, 32. Dieser Winkel beträgt beispielsweise mehr als 30°. Bei dem konkreten Ausführungsbeispiel liegt er bei etwa 40°.

Offenbart sind ein Verfahren zum Herstellen eines durchströmbaren Wellrippenelementes eines Heizregisters oder einer anderen Heizvorrichtung, ein nach einem derartigen Verfahren hergestelltes Wellrippenelement und ein mit derartigen Wellrippenelementen ausgeführtes Heizregister, bei denen die Wellrippenelemente durch Auffalten hergestellt sind.

### Bezugszeichenliste:

- 1: Heizregister
- 2: Rahmen
- 4: Heizelement
- 6: Heizelement
- 8: Heizelement
- 10: Heizelement
- 12: PTC-Widerstandselement
- 14: Kontakt
- 16: Kontakt
- 18: Wellrippenelement
- 20: Grundelement
- 22: Wellrippe
- 24: Wellrippe
- 26: Scheitel
- 28: Scheitel
- 30: Lamellenschenkel
- 32: Lamellenschenkel
- 34: Sicke
- 36: Sicke
- 38: Sicke
- 40: Haltebereich
- 42: Haltebereich

## Patentansprüche

1. Verfahren zum Herstellen eines umströmbaren Wellrippenelementes (18) für ein Heizregister (1) oder eine andere Heizvorrichtung, wobei das Wellrippenelement (18) eine Vielzahl von wellenförmig ausgebildeten Wellrippen (22, 24) hat, mit den Schritten:
- Herstellen eines Wellrippen-Grundelementes (20) derart, dass verrundete Scheitel (26, 28) der Wellrippen (22, 24) aneinander liegen oder in geringem Abstand zu einander angeordnet sind, und
- Beaufschlagen des Grundelementes (20) mit einer Zugkraft (F) derart, dass ein Abstand (D) zwischen den verrundeten Scheiteln (26, 28) durch Umformen vergrößert wird und sich dadurch die Gesamtlänge des Wellrippenelementes (18) entsprechend vergrößert,
wobei der Abstand (D) nach der Umformung zumindest das 5-fache einer Scheitelbreite (d) beträgt, wobei die Scheitel (26, 28) quer zur Längserstreckung des Grund- oder Wellrippenelements (18, 20) mit einer Presskraft (P) beaufschlagt werden, wobei die Presskraft (P) so gewählt ist, dass die Scheitel (26, 28) abgeflacht oder planiert werden, wobei Lamellenschenkel (30, 32) mit einem Winkel (α) von mehr als 30°angestellt sind.

2. Verfahren nach Patentanspruch 1, wobei bei dem Grundelement (20) in die sich an die Scheitel (26, 28) anschließenden Lamellenschenkel (30, 32) Sicken (34, 36, 38) ausgebildet sind.

3. Verfahren nach Patentannspruch 2, wobei an den Lamellenschenkeln (30, 32) mehrere Sicken (34, 36, 38) neben einander liegend angeordnet sind.

4. Wellrippenelement mit einer Vielzahl von wellenförmig ausgebildeten Wellrippen, wobei das Wellrippenelement aus einem Wellrippen-Grundelement gefertigt ist, dessen verrundete Scheitel an einander liegen oder in geringem Abstand zu einander angeordnet sind, wobei die verrundeten Scheitel des Wellrippenelements in einem Abstand zueinander angeordnet sind, der größer als beim Wellrippen-Grundelement ist, so dass dadurch die Gesamtlänge des Wellrippenelements größer als diejenige des Wellrippen-Grundelements ist, wobei der Abstand zwischen den Scheiteln zumindest das 5-fache einer Scheitelbreite beträgt,wobei die Scheitel (26, 28) quer zur Längserstreckung des Grund- oder Wellrippenelements (18, 20) mit einer Presskraft (P) beaufschlagt werden, wobei die Presskraft (P) so gewählt ist, dass die Scheitel (26, 28) abgeflacht oder planiert sind, wobei Lamellenschenkel (30, 32) mit einem Winkel (α) von mehr als 30°angestellt sind.

5. Heizregister mit einer Vielzahl von Wellrippenelementen (18) gemäß Patentanspruch 4.

## Claims

1. A method for producing a corrugated fin element (18) for a heating register (1) or for another heating device, wherein a flow can pass around said corrugated fin element, wherein the corrugated fin element (18) comprises a plurality of corrugated fins (22, 24) of wave-shaped design, the method comprising the steps of:
- producing a corrugated fin basic element (20) such that rounded apexes (26, 28) of the corrugated fins (22, 24) are in contact with each other or are arranged at a small distance to each other, and
- impacting the basic element (20) with a tensile force (F) such that a distance (D) between the rounded apexes (26, 28) is increased by deformation, and the total length of the corrugated fin element (18) thus increases correspondingly,
wherein the distance (D) after deformation is at least the 5-fold of an apex breadth (d), wherein the apexes (26, 28) are impacted with a pressing force (P) transversely to the longitudinal extension of the basic or corrugated fin element (18, 20), wherein the pressing force (P) is chosen such that the apexes (26, 28) are flattened or levelled, wherein lamella legs (30, 32) are angled with an angle (α) of more than 30°.

2. The method according to claim 1, wherein, in the basic element (20), swages (34, 36, 38) are formed in the lamella legs (30, 32) joining the apexes (26, 28).

3. The method according to claim 2, wherein a plurality of swages (34, 36, 38) are arranged side by side at the lamella legs (30, 32).

4. A corrugated fin element comprising a plurality of corrugated fins of wave-shaped design, wherein the corrugated fin element is made of a corrugated fin basic element whose rounded apexes are in contact with each other or are arranged at a small distance to each other, wherein the rounded apexes of the corrugated fin element are arranged at a distance to each other that is greater than at the corrugated fin basic element, so that the total length of the corrugated fin element is greater than that of the corrugated fin basic element,
wherein the distance between the apexes is at least the 5-fold of an apex breadth, wherein the apexes (26, 28) are impacted with a pressing force (P) transversely to the longitudinal extension of the basic or corrugated fin element (18, 20), wherein the pressing force (P) is chosen such that the apexes (26, 28) are flattened or levelled, wherein lamella legs (30, 32) are angled with an angle (α) of more than 30°.

5. A heating register comprising a plurality of corrugated fin elements (18) according to claim 4.

## Revendications

1. Procédé de fabrication d'un élément d'ailette ondulée (18) contournable par un écoulement pour une batterie de chauffage (1) ou un autre appareil de chauffage, dans lequel l'élément d'ailette ondulée (18) a une pluralité d'ailettes ondulées (22, 24) réalisées sous forme ondulée, avec les étapes :
- fabrication d'un élément de base d'ailette ondulée (20) de telle sorte que les sommets arrondis (26, 28) des ailettes ondulées (22, 24) sont adjacents ou sont à faible distance l'un de l'autre, et
- application à l'élément de base (20) d'une force de traction (F) de telle sorte qu'une distance (D) entre les sommets arrondis (26, 28) est agrandie par formage et la longueur totale de l'élément d'ailette ondulée (18) augmente de ce fait de manière correspondante,
dans lequel la distance (D) est égale après le formage au moins à 5 fois une largeur de sommet (d), dans lequel les sommets (26, 28) sont soumis à l'action d'une force de compression (P) de manière transversale par rapport à l'extension longitudinale de l'élément de base ou d'ailette ondulée (18, 20), dans lequel la force de compression (P) est choisie de telle sorte que les sommets (26, 28) sont aplatis ou aplanis, dans lequel des pattes de lamelles (30, 32) sont placées selon un angle (α) supérieur à 30°.

2. Procédé selon la revendication 1, dans lequel des nervures (34, 36, 38) sont réalisées dans l'élément de base (20) dans les pattes de lamelles (30, 32) adjacentes aux sommets (26, 28).

3. Procédé selon la revendication 2, dans lequel plusieurs nervures (34, 36, 38) sont agencées à côté l'une de l'autre sur les pattes de lamelles (30, 32).

4. Elément d'ailette ondulée doté d'une pluralité d'ailettes ondulées réalisées en forme d'onde, dans lequel l'élément d'ailette ondulée est produit à partir d'un élément de base d'ailette ondulée, dont les sommets arrondis sont adjacents ou sont disposés à une faible distance les uns par rapport aux autres, dans lequel les sommets arrondis de l'élément d'ailette ondulé sont disposés les uns par rapport aux autres à une distance, qui est plus grande que pour l'élément de base d'ailette ondulée de telle sorte qu'ainsi la longueur totale de l'élément d'ailette ondulée est plus grande que celle de l'élément de base d'ailette ondulée, dans lequel la distance entre les sommets est égale au moins 5 fois une largeur de sommet, dans lequel les sommets (26, 28) sont soumis à l'action d'une force de compression (P) de manière transversale par rapport à l'extension longitudinale de l'élément de base ou d'ailette ondulée (18, 20), dans lequel la fore de compression (P) est choisie de telle sorte que les sommets (26, 28) sont aplatis ou aplanis, dans lequel des pattes de lamelles (30, 32) sont installées selon un angle (α) supérieur à 30°.

5. Ecoulement pour une batterie de chauffage doté d'une pluralité d'éléments d'ailette ondulée (18) selon la revendication 4.
